# EUROPEAN PATENT SPECIFICATION

(11) **EP 0 495 819 B1**
(45) Date of publication and mention of the grant of the patent: **05.01.2000**
(21) Application number: 90914755.5
(22) Date of filing: 04.10.1990
(51) Int. Cl.: G01N 22/00

(54) **IMPROVEMENTS TO OIL/WATER MEASUREMENT**
ÖL-/WASSERMESSUNG
AMELIORATIONS APPORTEES AU MESURAG D'HUILE/EAU

(30) Priority: 04.10.1989 US 417658
(43) Date of publication of application: 29.07.1992
(60) Divisional application: 99201984.4
(73) Proprietor: AGAR CORPORATION INCORPORATED, Houston, Texas (US)
(72) Inventor: Agar, Joram, Grand Cayman (KY)
(74) Representative: Beresford, Keith Denis Lewis
(86) International application number: GB9001529
(87) International publication number: WO9105243

(56) References cited:
- US-A- 3 498 112
- US-A- 4 257 708
- US-A- 4 423 623
- US-A- 4 503 383
- US-A- 4 764 718
- US-A- 4 774 680
- Patent Abstracts of Japan, vol. 2, no. 20, page 11346E77, 9 February 1978; & JP-A-52139464 (TOKYO SHIBAURA DENKI) 21 November 1977
- Review of Scientific Instruments, vol. 50, no. 10, October 1979 American Institute of Physics (US) N. Abuaf et al.: "Radio-frequency probe for bubble size and velocity measurements", pages 1260-1262

## Description

The present invention relates to a device to measure content and velocity of aqueous and hydrocarbon mixtures in both oil-continuous and water-continuous phases.

There are numerous devices on the market which utilize the change in the dielectric constant to determine the amount of water in oil. These devices operate only in the oil-continuous phase, i.e. as long as the mixture behaves like a dielectric. However, as soon as the mixture changes to water-continuous, it stops being an insulator (dielectric) and the instrument indicates 100% water.

Other techniques which utilize optical principles suffer from a lack of sensitivity at the oil-continuous phase and cannot cope with thick oil build-up without frequent cleaning. Changes in the salinity of the water also tend to affect the absolute measurement of such parameters, e.g. refractive index, conductivity, dielectric constant, etc. Nuclear absorption, while giving good results with binary mixtures, are overmasked by heavy metallic contaminants, such as sulfur, vanadium, etc. Particle size in the water-continuous phase also plays an important part and affects the reading greatly.

US-A-4902961 describes a method and apparatus for determining the water content of crude oil in a pipeline. The device comprises an S-Band transmitter and receiver effective to transmit S-Band radiation across a pipeline containing the liquid, and an X-Band transmitter and receiver arranged to send X-Band radiation around a sidewall region of the pipeline. The amount of water in the pipe is determined from the values of the dielectric constants calculated from the transmission coefficients at the two frequencies.

EP-A-0154535 discloses an apparatus for determining the dielectric constant and/or conductivity of earth formations in a bore hole. The apparatus includes a transmitter which transmits electro-magnetic radiation within the range 10 MHz to 60 MHz down the bore hole. The signals from two receiver coils are used to calculate the dielectric constant and resistivity.

US-A-4423623 discloses a meter and method for measuring the composition and flow rate of a coal slurry. The coal slurry is arranged to flow through a waveguide, microwaves being propagated in the waveguide from a transmitter probe. Signals from a detector probe are used to determine the characteristic frequency of the waveguide. A further transmitter and detector are located in a different portion of the waveguide and used to determine characteristic frequencies at the different portion. The differences in the frequencies are used to determine the flow rate of the coal slurry.

US-A-3498112 discloses a microwave system for determining the water content in fuel oil. Microwave energy is directed through two test cells. The detected signals from these two test cells, together with the output of a third microwave detector which detects the microwave energy input into the two test cells, is used to provide output signals representative of the amount of water in a fluid passing through the test cells.

US-A-4774680 discloses a method and apparatus for determining the oil to water composition in an oil water mixture. A probe is used to transmit energy through the oil water mixture and the transmission characteristics are monitored. The measured values are compared to a predetermined value.

US-A-4257708 discloses an apparatus for measuring the amount of detergent in the water carried in a washing machine. Two light sources are used to produce light signals whose transmission characteristics are monitored. The first transmission characteristic is used to provide a reference signal to control the light output of the second light source.

According to one aspect of the present invention there is provided a device for measuring the concentration of two substances in a conduit as set forth in claim 1.

According to another aspect the present invention provides a method of measuring the concentration of two substances in a mixture as set forth in claim 6.

Embodiments of the present invention will now be described with reference to the accompanying drawings, in which:
Figure 1 shows the conduit and measuring system of one embodiment of the present invention, provided that the two distances d₁ and d₂ are different
Figure 2A shows another embodiment of the present invention using a "patch" type antenna, provided that the two distance d₁ and d₂ are different
Figure 2B shows an end view of Figure 2A;
Figure 2C shows a similar arrangement to Figure 2B but having a rectangular cross-section;
Figure 3 shows another embodiment of the present invention; and
Figure 4 shows another embodiment of the present invention using an insertion type probe, provided the distances d₁ and d₂ are different

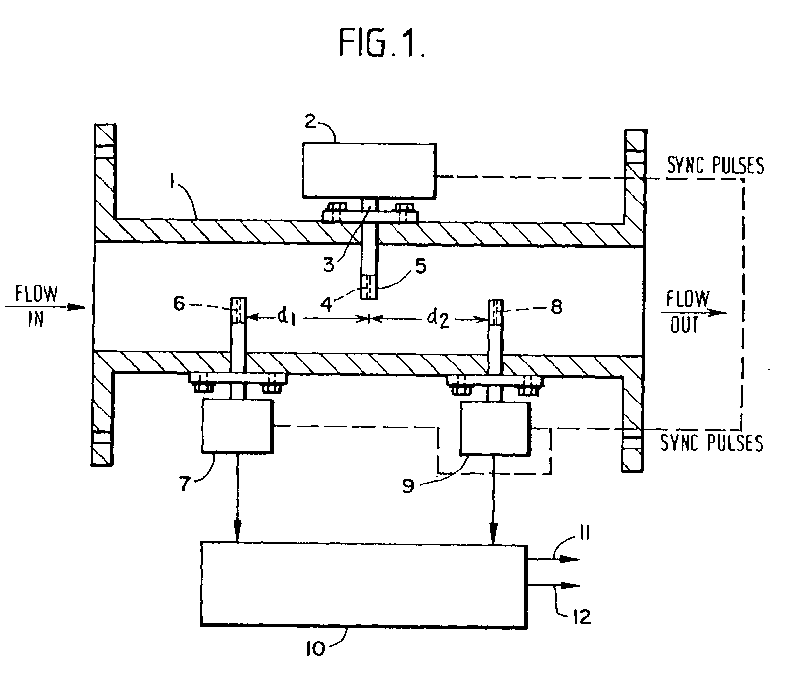

Fig. 1 describes such system which carries the dual purpose of measuring the hydrocarbon/water ratio and fluid velocity.

Figure 1 shows a conduit (1) for the fluid flow. the conduit (1) may have a circular or rectangular cross-section. Transmitter (2) transmits a high frequency signal via a coaxial cable (3) or a wave guide, to an antenna (4), which can be any known antenna such as a "horn", "patch", "monopole" or "dipole" antenna, which is insulated from the fluid by means of an insulator (5). Receivers (7) and (9) are connected to similar antennae arrangements (6) and (8), which are spaced from the transmitting antenna (4) distance "d₁" and "d₂" where "d₂" is normally twice "d₁". A divider (10) divides the outputs of receivers (7) and (9) and supplies a linearized output of the ratio of P₁/P₂, wherein P₁ is the value of the signal received at (7) and P₂ is the value of the signal received at (9). This linearizer may take the form of the curve selector linearizer, as disclosed in U.S. Patent US-A-4,774,680.

The "electrical loading" or impedance of fluid acting on antenna (4) will vary with the electrical characteristics of the fluid (this phenomena was utilized in U.S. Patent US-A-4,503,383) and thus the amount of energy transmitted will be affected by the nature of the fluid. The major problem with devices that utilize such measuring techniques is that the fluid and the surface of insulator (5) predominates the effect, in particular when the fluid consists of two immicible fluids such as water with a few drops of oil in it. If this mixture is not homogeneous, or the droplets size and coated thickness vary, the loading will be greatly affected by it. Thus, if one can measure the bulk properties of this fluid, these problems are overcome.

The present invention achieves these goals by measuring the ratio of the powers received by each receiver (7) and (9). As oil absorbs very little energy while water does, the amount of power received in each antenna is a function of the water content and the distance from the transmitting antenna. By taking the ratio of these signals, output (12) becomes independent of surface coating, etc. as both antennae (6) and (8) are exposed to the same fluid in exactly the same way.

By installing the antennae axially with the flow, and in such a way that one receiving antenna receives its signal with the direction of the flow, while the other, which is equally spaced, receives its signal against the direction of flow, the phase difference between these two received signals is directly proportional to the flow's velocity.

By transmitting at a frequency where the phase difference between the two signals due to the dielectric constant of water E = E' - jE" is maximum (around 2.45 GHz) the effect of salinity is greatly reduced. However higher frequencies can be used.

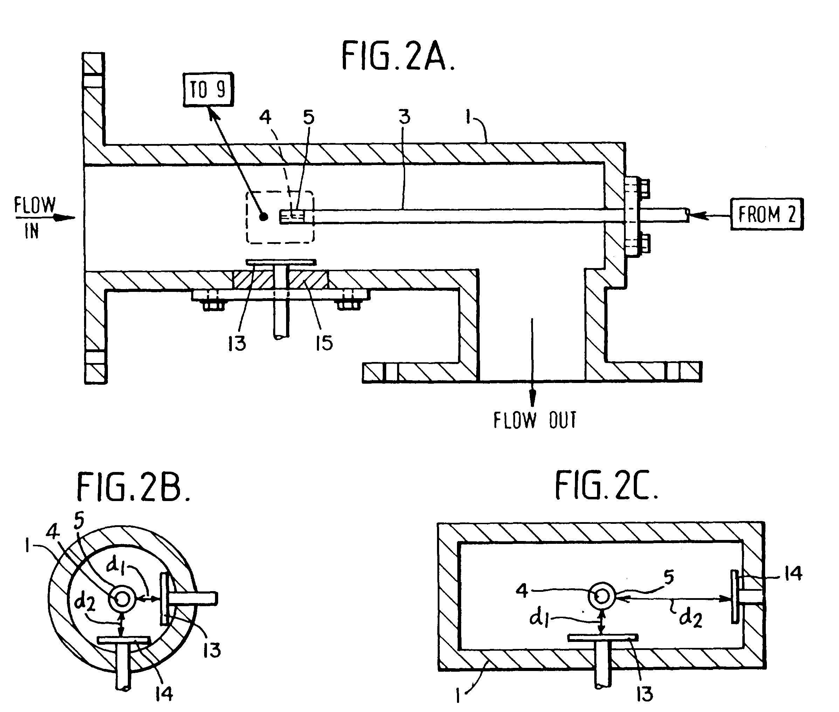

Fig. 2A shows another embodiment of the invention, according to which the receiving "monopole" antennae are replaced by two "patch" type (or similar) antennae.

All the other features such as the transmitter (2) and Phase Detector (10) of Fig. 1 are also common to Fig. 2A. The antennae arrangement in Fig. 2A is shown in 2 planes perpendicular to each other to demonstrate that two pairs of antennae can be used in any plane, not necessarily just opposite each other as shown in Fig. 1. Note that for clarity, only one pair is shown in Fig. 2A. The other pair is omitted for clarity sake. Also, only the "Patch" type is shown. Naturally, other types of known antennae configurations can be used, such as "horn", monopoles, dipoles, etc.

Fig. 2B shows an end view of Fig. 2A, where one monopole transmitter antenna (4) is used in the center and two receiving antennae (13) & (14). Fig. 2B shows a circular cross-section waveguide, while Fig. 2C shows a similar arrangement with a rectangular cross-section waveguide. Again, other types of conventional antennae can be used in this configuration such as two pairs of monopoles, "horn" type, etc. The transmitting antenna can be shared, or split into two separate ones. The advantage of two separate pairs is the elimination of cross-coupling between one receiving antenna and the other. The peripheral equipment surrounding the prime sensor is the same as shown in Fig. 1.

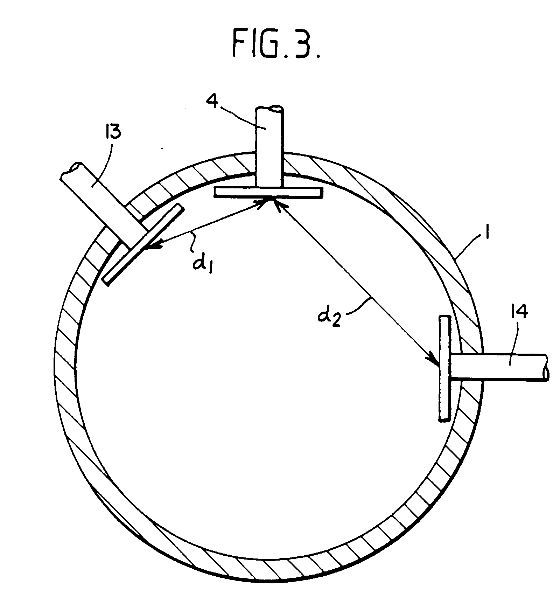

Fig. 3 shows another possible way to achieve the same end, using one dipole transmitting antenna 4, and two dipole-receiving antennae 13,14. The drawing shows such arrangement in a circular wavelength 1. Naturally, the more conventional rectangular waveguide can also be used. Fig. 3 shows how to achieve the required differential distances d₁ and d₂ in one specific way. The antennae can be located in one plane, or spaced axially, too. Spacing the antennae axially lowers their cross-coupling which improves the linearity of the measured signal. Again, instead of sharing one transmitter antenna, two independent pairs can be used to further reduce the cross-coupling. The peripheral equipment is the same as shown in Fig. 1.

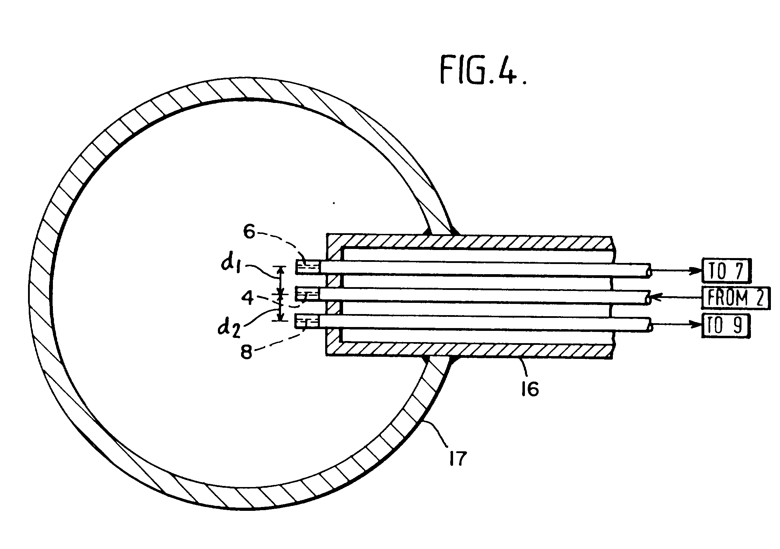

Fig. 4 shows an insertion-type.probe (16) inserted into a large conduit (17). Again, instead of the monopoles shown, dipoles and other type antennae can be used. Probe (16) is shown welded to pipe (17), but any other form of attachment can be used, e.g. the use of a seal-housing as described in U.S. Patent 4,503,383. Similar peripheral electronics as described in Fig. 1 can be used for signal conversion.

## Claims

1. A device for measuring the concentrations of two substances in a conduit (1) by means of the transmission of electromagnetic waves through a mixture of said two substances, said device comprising:
transmitter means (4) adapted for location within said conduit (1) and at a distance from inner walls thereof, and for transmitting electromagnetic waves through said mixture in said conduit (1);
first and second receiving elements (6, 8) adapted for location within said conduit (1) and at a distance from said inner walls of said conduit (1), for receiving the electromagnetic waves transmitted by said transmitter means (4) through a measurement region of said mixture in said conduit (1), and for providing respective first and second output signals, wherein said receiving elements (6, 8) are arranged at positions two different distances (d₁, d₂) from said transmitter means (4); and
processing means (10) adapted to receive the first and second output signals as the only variables obtained by means of transmission and reception of electromagnetic waves of a single predetermined frequency through said measurement region of said mixture in said conduit (1) and to determine the concentrations of the two substances by taking the ratio of the first and second output signals.

2. A device according to claim 1, wherein said processing means (10) comprises:
means for determining the concentrations of the two substances by taking the ratio of the powers of the received first and second output signals.

3. A device according to any preceding claim, wherein said transmitter means (4) is arranged to transmit a signal having a frequency of around 2.45 GHz or higher through said mixture of said two substances.

4. A device according to any previous claim, wherein said first receiving element (8) is arranged twice as far away from said transmitter means (4) as said second receiving element (6).

5. A method of measuring the concentrations of two substances in a mixture of said two substances in a conduit (1), the method comprising the steps of:
transmitting electromagnetic waves through said mixture in said conduit (1) using transmitter means (4) located within said conduit (1) at a distance from walls thereof;
receiving the electromagnetic waves transmitted by said transmitter means (4) through a measurement region of said mixture in said conduit (1) at a distance from said walls thereof using first and second receiving elements (6, 8) located within said conduit (1) and spaced from said walls thereof at positions two different distances (d₁, d₂) from said transmitter means (4) to provide respective first and second output signals; and
using said first and second output signals as the only variables obtained by means of transmission and reception of electromagnetic waves of a single predetermined frequency through said measurement region of said mixture in said conduit (1) to determine the concentrations of the two substances by taking the ratio of the first and second output signals.

6. A method according to Claim 5, wherein the concentrations of the two substances are determined by taking the ratio of the powers of the first and second output signals.

7. A method according to any one of claims 5 or 6, wherein the electromagnetic waves which are transmitted have a frequency of around 2.45 GHz or higher.

8. A method according to any one of Claims 5 to 7, wherein said first receiving element (8) is arranged twice as far away from said transmitter means (4) as said second receiving element (6).

## Patentansprüche

1. Vorrichtung zum Messen der Konzentration von zwei Substanzen in einer Leitung (1) mittels der Übertragung von elektromagnetischen Wellen durch ein Gemisch dieser zwei Substanzen, wobei die Vorrichtung aufweist:
Sendemittel (4), die für das Anordnen innerhalb der Leitung (1) und mit Abstand zu der Innenwand der Leitung ausgebildet sind, und zum Senden von elektromagnetischen Wellen durch das Gemisch in der Leitung (1),
erste und zweite Empfangselemente (6, 8), die für das Anordnen innerhalb der Leitung (1) und mit einem Abstand zu der Innenwand der Leitung ausgebildet sind, zum Empfangen der elektromagnetischen Wellen, die von den Sendemitteln durch einen Meßbereich des Gemisches in der Leitung (1) gesendet worden sind, und zum Schaffen von ersten bzw. zweiten Ausgangssignalen, wobei die Empfangselemente (6, 8) an Positionen mit zwei unterschiedlichen Abständen (d₁, d₂) zu den Sendemitteln (4) angeordnet sind, und
eine Verarbeitungseinrichtung (10), die so ausgebildet ist, daß sie die ersten und zweiten Ausgangssignale als die einzigen Variablen empfängt und die mittels Senden und Empfangen von elektromagnetischen Wellen einer einzelnen vorbestimmten Frequenz durch den Meßbereich des Gemisches in der Leitung (1) erzielt werden und die die Konzentration der zwei Substanzen bestimmt, indem sie das Verhältnis des ersten zum zweiten Ausgangssignals bildet.

2. Vorrichtung nach Anspruch 1, wobei die Verarbeitungseinrichtung (10) aufweist:
Mittel zum Bestimmen der Konzentrationen von zwei Substanzen durch Bestimmen des Verhältnisses der Leistungen der zwei empfangenen ersten und zweiten Ausgangssignale.

3. Vorrichtung nach einem der vorstehenden Ansprüche, wobei die Sendemittel (4) so angeordnet sind, daß sie durch das Gemisch aus zwei Substanzen ein Signal senden, das eine Frequenz von ungefähr 2,45 GHz oder höher hat.

4. Vorrichtung nach einem der vorstehenden Ansprüche, wobei das erste Empfangselement (8) in einer Entfernung zu den Sendemitteln (4) angeordnet ist, die das zweifache der Entfernung des zweiten Empfangselementes (6) beträgt.

5. Verfahren zum Messen der Konzentrationen zweier Substanzen in einem Gemisch der zwei Substanzen in einer Leitung (1), mit den Schritten:
Senden von elektromagnetischen Wellen durch das Gemisch in der Leitung (1) unter Verwendung der Sendemittel, die innerhalb der Leitung (1) in einem Abstand zu dessen Wandung angeordnet sind,
Empfangen der elektromagnetischen Wellen, die durch die Sendemittel (4) durch einen Meßbereich in dem Gemisch in der Leitung (1) mit einem Abstand zur Wandung gesendet werden, unter Verwendung von ersten und zweiten Empfangselementen (6, 8), die innerhalb der Leitung (1) und im Abstand zu der Wandung an Positionen liegen, die zwei unterschiedliche Abstände (d₁, d₂) zu den Sendemitteln (4) haben, um entsprechende erste und zweite Ausgangssignale zu erzeugen, und
Verwenden der ersten und zweiten Ausgangssignale als einzige Variablen, die mittels Senden und Empfangen von elektromagnetischen Wellen mit einer einzigen vorbestimmten Frequenz durch den Meßbereich des Gemisches in der Leitung (1) erzielt werden, um die Konzentration der zwei Substanzen zu bestimmen, indem das Verhältnis vom ersten zum zweiten Ausgangssignal verwendet wird.

6. Verfahren nach Anspruch 4, wobei die Konzentrationen der zwei Substanzen bestimmt werden, indem das Verhältnis der Leistungen der ersten und zweiten Ausgangssignale verwendet wird.

7. Verfahren nach einem der Ansprüche 5 oder 6, wobei die gesendeten elektromagnetischen Wellen eine Frequenz von ungefähr 2,45 GHz oder höher haben.

8. Verfahren nach einem der Ansprüche 5 bis 7, wobei das erste Empfangselement (8) in einem Abstand zu den Sendemitteln (4) angeordnet ist, der das zweifache des Abstandes des zweiten Empfangselementes (6) beträgt.

## Revendications

1. Un dispositif de mesure des concentrations de deux substances dans une conduite (1) grâce à l'émission de rayonnements électromagnétiques à travers un mélange desdites deux substances, ledit dispositif comprenant :
- des moyens d'émission (4) prévus pour être disposés à l'intérieur de ladite conduite (1) et à une distance des parois intérieures, et pour l'émission d'ondes électromagnétiques à travers ledit mélange dans ledit conduit (1) ;
- des premier et second éléments récepteurs (6, 8) conçus pour être disposés à l'intérieur dudit conduit (1) et à une distance desdites parois internes dudit conduit (1), pour recevoir les ondes électromagnétiques émises par lesdits moyens d'émission (4) à travers la région de mesure dudit mélange dans ledit conduit (1) et pour fournir des premier et second signaux de sortie respectifs, dans lesquels lesdits éléments récepteurs (6, 8) sont disposés en des positions à deux distances différentes (d₁ et d₂) desdits moyens d'émission (4); et
- des moyens de traitement (10) conçus pour recevoir les premier et second signaux de sortie en tant que seules variables obtenues grâce à l'émission et à la réception d'ondes électromagnétiques d'une fréquence prédéterminée unique à travers ladite région de mesure dudit mélange dans ladite conduite (1) et pour déterminer les concentrations des deux substances en prenant le rapport des premier et second signaux de sortie.

2. Un dispositif selon la revendication 1, dans lequel lesdits moyens de traitement (10) comprennent :
- des moyens de détermination des concentrations de deux substances en prenant le rapport de puissance des premier et second signaux de sortie reçus.

3. Un dispositif selon l'une quelconque des revendications précédentes, dans lequel lesdits moyens d'émission (4) sont disposés pour émettre un signal ayant une fréquence de l'ordre de 2,45 GHz ou davantage à travers ledit mélange desdites deux substances.

4. Un dispositif selon l'une quelconque des revendications précédentes, dans lequel ledit premier élément récepteur (8) est disposé à une distance double desdits moyens d'émission (4) de celle dudit second élément récepteur (6).

5. Une méthode de mesure des concentrations de deux substances dans un mélange desdites deux substances dans une conduite (1), la méthode comprenant les étapes de :
- l'émission d'ondes électromagnétiques à travers ledit mélange dans ladite conduite (1) en utilisant des moyens d'émission (4) disposés à l'intérieur de ladite conduite (1) à une certaine distance de ses parois ;
- la réception des ondes électromagnétiques émises par lesdits moyens d'émission (4) à travers la région de mesure dudit mélange dans ladite conduite (1), à une certaine distance de ces dites parois, en utilisant un premier et un second éléments récepteurs (6, 8) disposés à l'intérieur de ladite conduite (1) et à une certaine distance desdites parois en des positions situées à des distances différentes (d₁, d₂) desdits moyens d'émission (4) pour obtenir des premier et second signaux de sortie respectifs ; et
- l'utilisation desdits premier et second signaux de sortie comme seules variables obtenues grâce à l'émission et à la réception des ondes électromagnétiques d'une fréquence prédéterminée unique à travers ladite région de mesure dudit mélange dans ladite conduite (1) pour déterminer les concentrations des deux substances en prenant le rapport des premier et second signaux de sortie.

6. La méthode selon la revendication 5, dans laquelle les concentrations des deux substances sont déterminées en prenant le rapport de puissance des premier et second signaux de sortie.

7. Une méthode selon l'une quelconque des revendications 5 ou 6, dans laquelle les ondes électromagnétiques qui sont émises ont une fréquence de l'ordre de 2,45 GHz ou supérieure.

8. Une méthode selon l'une quelconque des revendications 5 à 7, dans laquelle ledit premier élément récepteur (8) est disposé à une distance double des moyens d'émission (4) de celle du second élément récepteur (6).
